# EUROPEAN PATENT APPLICATION

(11) **EP 4 063 043 A1**
(43) Date of publication of application: **28.09.2022**
(21) Application number: 21165233.4
(22) Date of filing: 26.03.2021
(51) Int. Cl.: B22F 3/105, B22F 10/28, B22F 10/39, B33Y 10/00, B33Y 30/00, B22F 7/06, B22F 7/08, B33Y 80/00

(54) **METHOD OF ADDITIVE MANUFACTURING A PART BY POWDER-BED-FUSION ONTO A SUBSTRUCTURE AND RELATED METHOD OF SERIALISING**

(71) Applicant: Siemens Energy Global GmbH & Co. KG, 81739 München (DE)
(72) Inventor: HOCKLEY, Carl, Wr4 0DE Worcester (GB); FARMER, Simon, B96 6QU Worcestershire (GB)

(57) **Abstract**

A method of additive manufacturing a part (10) by powder-bed-fusion onto a substructure (1) is presented. The method comprises, (i), engaging the substructure (1) to a build substrate (2) such that the substructure (1) forms part of a manufacturing plane (P) for the build-up of the part (10), (ii), establishing the part (10) on top of the substructure (1), and, (iii), removing the established part (10) including disengaging the substructure (1) from the build substrate (2). Furthermore, an accordingly manufactured part (10) and/or batch of parts (10) and a related method of serialising the parts (10) are presented.

## Description

The present invention relates to a method of additive manufacturing a part by powder-bed-fusion (PBF) and a related serialising method. Moreover, an accordingly manufactured part and/or manufacturing batch of parts are subject to the present invention.

Preferably, the part denotes a component of a turbo machine, e.g. applied in the flow path hardware of a gas turbine. The component is, thus, preferably made of a nickel-based or cobalt-based superalloy, particularly a precipitation hardened alloy.

In the alternative, the part may pertain to a high-performance component, such as a component applied in power generation, in the aviation or the automotive industry.

Additive manufacturing (AM) or 3D-printing techniques comprise e.g. powder-bed-fusion methods, such as selective laser melting (SLM), selective laser sintering (SLS) and electron beam melting (EBM).

A method of selective laser melting is described in EP 3 022 008 B1, for example.

Additive manufacturing, particularly powder-bed-based methods have proven to be useful and advantageous in the fabrication of prototypes or complex components, such as components with filigree structure or functionally cooled components. Further, the additive manufacture stands out for its short chain of process steps which in turn enables material economization and a particularly low lead time.

Further additive manufacturing approaches relate to "Directed Energy Deposition (DED)", such as laser cladding, electron beam or plasma welding, metal inkjet molding (MIM), so-called sheet lamination methods, or thermal spraying (VPS, LPPS) methods, cold spraying (GDCS).

Related apparatuses or setups for such methods usually comprise a manufacturing platform or build substrate on which the part may be built layer-by-layer after the feeding of a layer of built material which may then be melted, e.g. by an energy beam, like a laser, and subsequently solidified. The layer thickness is determined by a recoater that moves, e.g. automatically, over the powder bed and removes excess material from a manufacturing plane and/or build space. Typical layer thicknesses amount to between 20 µm and 40 µm. During the manufacture, said energy beam scans over the surface and melts the powder on selected areas which may be predetermined by a CAD-file according to the geometry of the part to be manufactured. Said scanning or irradiation is preferably carried out in a computer-implemented way or via computer-aided means, such as Computer-Aided-Manufacturing (CAM) instructions, which may be present in the form of a dataset. Said dataset or CAM-file may be or refer to a computer program or computer program product.

Currently, there are no viable solutions to enable unique identification or serialisation functions or structures which are integrally established during the additive manufacture of a part or a manufacturing batch, such as by laser powder bed fusion or similar technologies.

In order to provide for an integrated identification, a new iteration of a related build job to be created would be required and re-uploaded to the machine or manufacturing processor. Therefore, currently, a serialisation of additively manufactured parts only takes place after the additive manufacturing build job, in subsequent steps. However, this of course introduces risks of counterfeiting and breaking the chain of serialisation and traceability.

It is, thus, an object of the present invention to provide for improved means of manufacturing, serialisation and/or identification of additively manufactured parts or related manufacturing batches.

The mentioned object is achieved by the subject-matters of the independent claims. Advantageous embodiments are subjectmatter of the dependent claims.

An aspect of the present invention relates to a method of additive manufacturing a part by powder-bed-fusion onto a substructure. The method comprises engaging the substructure to a build substrate or platform, such that the substructure forms part of or provides a manufacturing plane for the buildup of the part.

The term "manufacturing plane" shall preferably denote an initial plane serving as a base for the build-up of an initial layer of the part's structure.

The method further comprises establishing the part at least partly on top of the substructure. Said build-up is preferably carried out according to a predetermined geometry which may be provided by way of a CAD-dataset.

The method further comprises removing the established part after its buildup, wherein the part was expediently bonded and adhesively connected to the substructure, thus including the disengaging of the substructure from the build substrate.

Aa an advantage, the present approach provides the possibility to uniquely identifying and/or serialising additively manufactured parts "in situ" or directly and reliably during the build job. Thereby, traceability and authentication of the part are as well clearly improved. In addition, the approach allows to increase efficiency in the whole manufacturing route, as the time required to subsequently and/or manually create identification or serialisation marks can advantageously be dispensed with for any given build job.

Still further, the removal of the part from the build substrate may considerably be facilitated and improved. It is known that particularly the removal of high-performance or highly resilient materials like superalloys from a build substrate, onto which the parts were welded, is complex and time-consuming.

It is contemplated that the part may not exclusively be built on top and welded to the substructure but e.g. as well to a surface of the built substrate which may, thus, possibly also form part of the manufacturing plane.

In an embodiment the part is fused, welded or adhesively or structurally bonded to the substructure.

In an embodiment the part is established from the same material as that one, the substructure is made of. Alternatively, another material as the one used for the substructure may be chosen for the part.

In an embodiment the substructure is engaged to the build substrate by inserting the substructure or inlaying it into a recess of the build substrate. This embodiment easily enables a reliable fixation and/or release of the substructure, such as in a non-destructive way. According to this embodiment, the substructure may be engaged to the recess just by a form fit.

In an embodiment, the substructure is disengaged from the build substrate later on, such as just by taking or removing the part out of the recess.

In an embodiment, the substructure is engaged to the build substrate by fixing it to the same, such as by a clamping means or the like. According to this embodiment, the substructure may at least partly be engaged to the build substrate by a frictional connection and/or a force closure.

In an embodiment, the substructure is removed from the build substrate by releasing it from the aforesaid fixation.

In an embodiment the substructure is, comprises or constitutes a serialising and/or identification artefact which allows for an identification and/or tracing of the part(s) being manufactured in a serialised batch or serial production. It is, thus, contemplated that the substructure functions as a carrier for said artefact. Additionally or alternatively, a material of the substructure or its shape may per se be suitable for serialising and/or identifying the part.

In an embodiment the substructure comprises a serial number and/or identification and/or serialisation indicia.

In an embodiment the part is established or additively fused only on top of the substructure, i.e. without a structural connection to the described build substrate. According to this embodiment, a manufacturing plane may in this case be provided only by a surface area of the substructure. However, this embodiment would significantly ease a later removal of the build-up from the build space, as the removal of the substructure simultaneously facilitates a removal of the part from the build substrate.

As will also be described in greater detail below, an alternative embodiment pertains to a case, where the part is established or welded on a manufacturing plane that is provided by the build substrate as well as the substructure. In this case, on the contrary, a release of the part may require complicated cutting or machining efforts, such as electrical discharge machining, or the like.

In an embodiment, for the removal of the part from the build substrate or build space, the substructure is released from the build substrate in a non-destructive manner. This brings the advantage that the buildup, i.e. the substructure along with the part manufactured in top of it, can easily be removed as one piece from the machine. At the same time, however, serialisation is achieved as the substructure, bearing the described artefact, is effectively (monolithically) connected to the part.

A further aspect of the present invention relates to the part as manufactured according to the described method.

A further aspect of the present invention relates to a batch of parts, each of which manufactured and/or serialised according to the described method.

A further aspect of the present invention relates to the substructure as well as to the substrate, e.g. comprising the recess as described above. The substructure and the built substrate may thus contribute to the advantages of the present invention.

A still further aspect of the present invention relates to a method of serialising of parts, or identifying them in series production, such as the described components which are manufactured additively by selective laser melting or powder bed fusion. The method is facilitated in line with the method of additive manufacturing of the part as described above, wherein the substructure comprises or constitutes the serialising artefact, such as including the serial number and identification indicia for identifying and/or tracing each one of the parts of the batch.

Advantages and embodiments relating to the described method of manufacturing and/or the described part(s) may as well pertain or be valid with regard to the method of serialisation as described.

Further, features and advantageous embodiments become apparent from the following description of the exemplary embodiment in connection with the Figures.

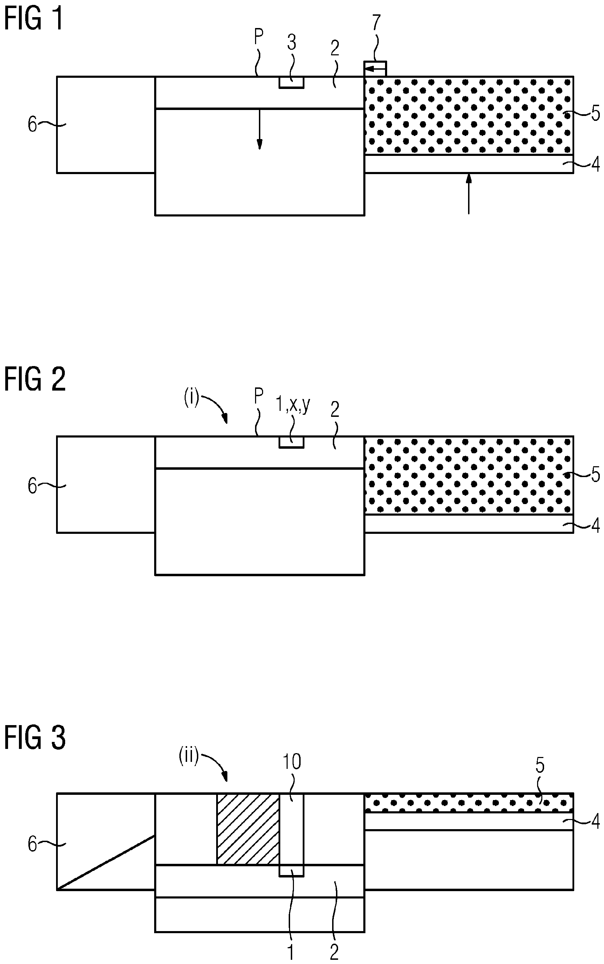

Figures 1 to 5 indicate by way of sectional schematic images, a process flow of additive manufacturing which allows to serialise as-manufactured parts according to the present invention.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

Figure 1 shows, in a sectional schematic, parts of a PBF additive manufacturing principle or device. The center of the picture shows a build substrate or platform 2. The downward pointing arrow indicates that said substrate 2 may be lowered layer-by-layer as the manufacture of a part or component proceeds.

The build substrate 2 provides for a manufacturing plane P on top of which the part (cf. numeral 10 below) is directly established, preferably by way of material fusion. The build substrate is further provided with a recess as indicated by reference numeral 3. Preferably, the recess eases a later serialisation, connection and e.g. as well a removal of the manufactured part from the substrate platform 2.

On the right, a supply of a build material or powder 5 is shown which may be conveyed to the manufacturing plane P in that a related supply piston 4 is lifted up stepwise. Any powder provided at the top of the supply is usually distributed by a recoater 7 which spreads a powder layer over the manufacturing plane P, wherein an excess material may be rejected by or into an overflow bin 6 (cf. left in Figure 1). Such a basic principle is standard for state-of-the-art powder bed fusion, selective laser melting or electron beam melting devices. However, it is apparent that principles of the present invention may not only be applied to a device having a material feed or recoating system as sketched herein. In the alternative, e.g. the providing of the built material 5 may take place via any other apparatus, such as by providing it from the top to the manufacturing plane P.

As compared to Figure 1, Figure 2 indicates in a subsequent method step further principles of the present invention. The inventive method is a method of additive manufacturing a part (cf. reference numeral 10 in Figure 3 below) by powder-bed-fusion onto the substructure 1. It is particularly indicated in Figure 2 that the method comprises in step (i) engaging the substructure 1 to the build substrate 2 such that the substructure 1 forms part of a manufacturing plane P for the build-up of the part 10. In other words, once the substructure 1 has been engaged to the build substrate 1, both structures preferably form part of a common manufacturing plane P. To this effect, said plane P may be a complementary manufacturing plane P.

For the engaging of the substructure 1 to the build substrate 2, preferably to the recess 3, the substructure 1 may be anyhow fixed or engaged to the substrate 2, such as by frictional connections, clamps or just by a form fit. Said fixation or engagement of the substructure 1 to the build substrate 2 is preferably carried out such that any interspaces or gaps are prevented or sealed against any distributed powder 5 during the manufacturing process. This is expedient, as such powder would be prone to warming and sintering during the manufacturing process.

The aforesaid substructure 1 preferably comprises or constitutes a serialisation artefact which allows for an identification and/or tracing of parts 10 manufactured in a serialised batch 100. To this effect, the substructure 1 may be indicated by any indicium or numerals which are exemplified in Figure 2 by "x,y" (cf. below). Said symbols or indicia, which may be or comprise any identification characters (of any font) may as well comprise a serial number for serialising an as-manufactured part.

Figure 3 indicates a subsequent method step according to the present invention. The step (ii) actually constitutes establishing the part 10 on top of the substructure 1, wherein the part 10 is expediently fused, joined or welded to the substructure 1, such that structural bond is created. To this effect, the part 10 is preferably established from the same material as that one of the substructure 1.

In the alternative, however, it is contemplated that the part 10 is established from a material separate from that one of the substructure 1.

It is indicated by the filled contour of the part that it is established only on top of the substructure 1, i.e. preferably without a structural connection to the build substrate 2.

In the alternative, however, it may be contemplated that the part 10 is additively established not only on the substructure 1, but as well on parts of the build substrate 2 which may also form part of the manufacturing plane P as described above. This is indicated by the hatched contour as indicated left in Figure 3 on top of the manufacturing plane P.

The geometry of the part 10 may, in contrast to the mere schematic representations of the figures, have any complex shape or design.

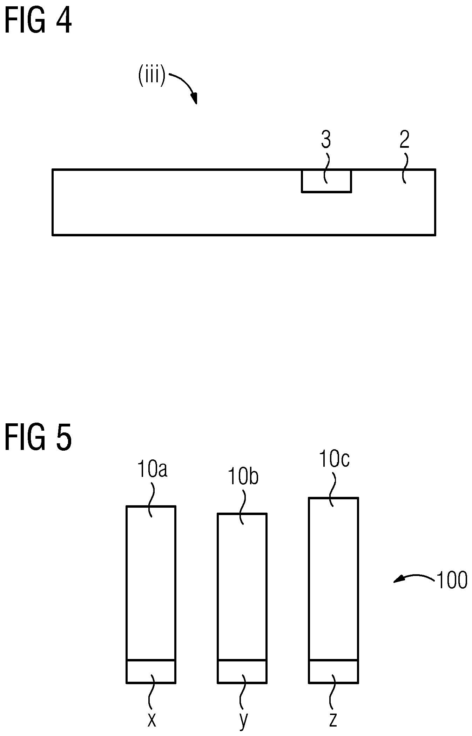

Figure 4 indicates just by way of an empty build substrate 2 and a non-filled recess 3 that, according to method step (iii), the established part 10 is removed again from the build substrate 2 (along with the substructure 1). Due to the aforesaid engagement of the part 10 and the substructure 1, said removal includes disengaging the substructure 1 from the build substrate 2. In turn, said removal or release also effectuates a release of the part 10 from the build substrate 2, preferably in a non-destructive manner.

Thereby, simultaneously, the described artefact or substructure would inherently be serialised just by the mere fact that the part contains the artefact of the substructure 1.

In case that the part 10 was only connected to the substructure 1, the removal may even be facilitated without any further machining or cutting. This is a great benefit, as cutting or other conventional approaches to remove the structure from the substrate, such as by electric discharge machining, is usually very complex and time-consuming. Said extra machining may only be necessary in case that the buildup structure was also joined to the build substrate 2 during the manufacturing process.

Figure 5 indicates a batch 100 or series of parts 10a, 10b and 10c like the ones described above. Each of the mentioned components were preferably manufactured according to the described method and serialised or tagged accordingly by the artefact of the substructure 1. Moreover, each of the mentioned parts has particularly been identified with a different indicium (cf. x, y, z in Figure 5). To this effect, Figure 5 may exemplify a whole manufacturing lot 100 of related parts 10.

The part or manufacturing lot or batch of parts as referred to herein may particularly relate to a part or an article of complex shape, such as with filigree portions of structures. Preferably, said component is made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said part may relate to another or similar component.

## Claims

1. Method of additive manufacturing a part (10) by powder-bed-fusion onto a substructure (1), comprising:
- (i) engaging the substructure (1) to a build substrate (2) such that the substructure (1) forms part of a manufacturing plane (P) for the build-up of the part (10),
- (ii) establishing the part (10) on top of the substructure (1), and
- (iii) removing the established part (10) including disengaging the substructure (1) from the build substrate (2).

2. Method according to claim 1, wherein the part (10) is fused to the substructure (1).

3. Method according to claim 1 or 2, wherein the part (10) is established from the same material as that one of the substructure (1).

4. Method according to one of the previous claims, wherein the substructure (1) is engaged to the build substrate (2) by inserting the substructure (1) into a recess (3) of the build substrate (2).

5. Method according to one of the previous claims, wherein the substructure (1) is engaged to the build substrate (2) by fixing it to the same.

6. Method according to one of the previous claims, wherein the substructure (1) is a serialising artefact which allows for an identification and/or tracing of parts (1) manufactured in a serialised batch (100).

7. Method according to claim 6, wherein the substructure (1) comprises a serial number and/or identification indicia (x,y,z).

8. Method according to one of the previous claims, wherein the part (10) is established only on top of the substructure (1), i.e. without a structural connection to the build substrate.

9. Method according to claim 8, wherein for the removal of the part (10) the substructure (1) is released from the build substrate (2) in a non-destructive manner.

10. Part (10) manufactured according to the method of one of the previous claims.

11. Batch (100) of parts (10) each of which manufactured according to the method of one of claims 1 to 9.

12. Method of serialising parts (10) in additive manufacturing in line with the method of one of claims 1 to 9, wherein the substructure (1) comprises a serialising artefact (x,y,z) for identifying and/or tracing of parts (10) manufactured in a serialised batch (100).
